# EUROPEAN PATENT SPECIFICATION

(11) **EP 2 810 757 B1**
(45) Date of publication and mention of the grant of the patent: **21.06.2017**
(21) Application number: 13782163.3
(22) Date of filing: 26.04.2013
(51) Int. Cl.: B29C 47/10, B29C 47/36, B29C 47/64, B29C 47/68, B29C 47/76

(54) **DEVICE AND METHOD FOR SCREW-TYPE SUPPLY OF FINE POWDER RAW MATERIAL**
VORRICHTUNG UND VERFAHREN ZUR SCHRAUBENARTIGEN ZUFUHR VON FEINPULVERROHMATERIAL
DISPOSITIF ET PROCÉDÉ POUR ALIMENTATION DU TYPE À VIS DE MATIÈRE PREMIÈRE EN FINE POUDRE

(30) Priority: 27.04.2012 JP 2012102192
(43) Date of publication of application: 10.12.2014
(73) Proprietor: The Japan Steel Works, Ltd., Tokyo 141-0032 (JP)
(72) Inventor: SHIMIZU, Yohei, Hiroshima-shi Hiroshima 736-8602 (JP); KAKIZAKI, Jun, Hiroshima-shi Hiroshima 736-8602 (JP); IWAMOTO, Yoshihiko, Hiroshima-shi Hiroshima 736-8602 (JP)
(74) Representative: Regimbeau
(86) International application number: PCT/JP2013/062391
(87) International publication number: WO 2013/161998

(56) References cited:
- EP-A2- 0 309 409
- EP-A2- 0 309 410
- GB-A- 1 227 150
- JP-A- H10 100 144
- JP-A- H11 245 283
- JP-A- 2002 210 805
- JP-A- 2002 210 805
- JP-A- 2003 071 831
- JP-A- 2010 131 912
- US-A- 4 904 285
- US-A1- 2008 248 152
- US-A1- 2010 202 243
- US-B2- 7 607 817

## Description

### TECHNICAL FIELD

The present invention relates to screw-type fine powder raw material feeding device and method, and more particularly to a novel improvement for fixing a screen wound about the outer periphery of a tubular receiving member, which has gas vent ports, with annular metal fixtures, and setting a gap between the screen and the outer diameter of a screw to 1 mm to 10 mm, and moreover preventing the fine powder raw material from leaking to the outside.

### BACKGROUND ART

The configuration disclosed in Patent Literature 1 is shown by way of example in FIGS. 3 to 5 to illustrate the conventional screw-type fine powder raw material feeding device and method of this type.

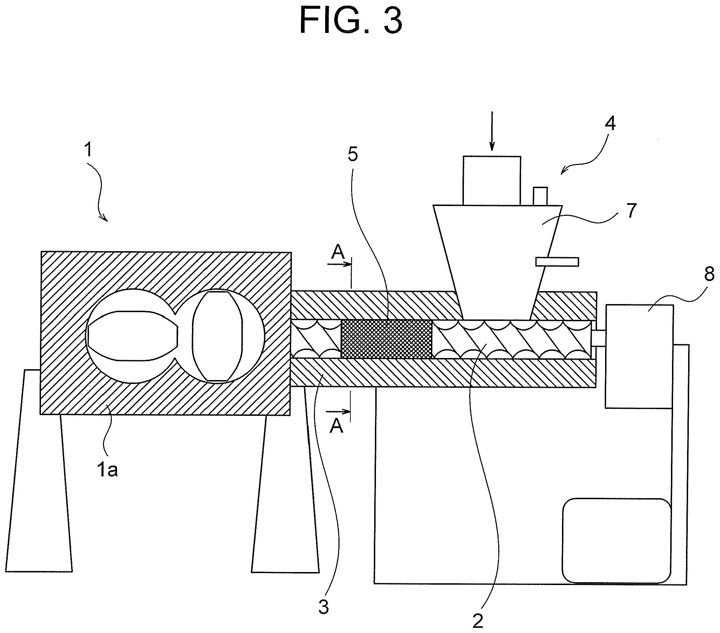

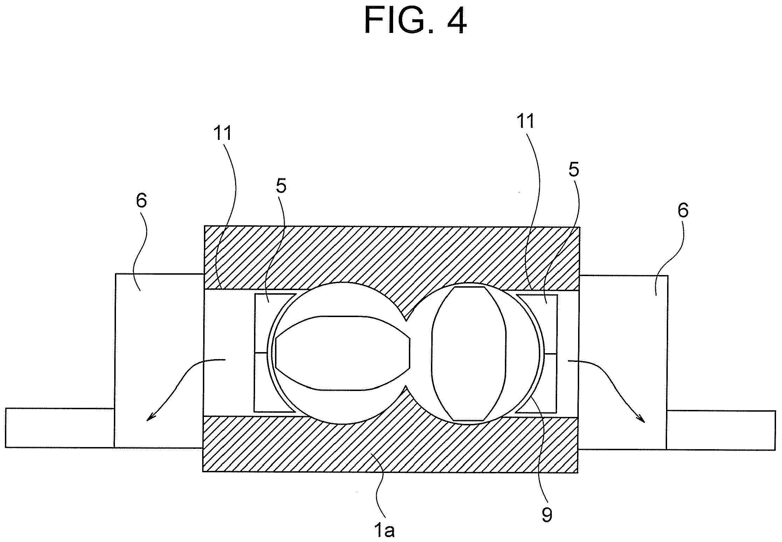

Thus, in FIGS. 3 and 4 the reference numeral 1 stands for a twin-screw kneading extruder for processing a fine powder raw material. A feeding cylinder 3 incorporating a screw 2 for feeding the fine powder raw material is provided in connection to a side portion of the kneading extruder 1.

A screen unit 5 and a forced venting chamber 6 are provided at each side of the feeding cylinder 3 of a fine powder raw material feeding device 4 mainly constituted by the screw 2 and the feeding cylinder 3.

A hopper 7 for feeding the fine powder raw material into the feeding cylinder 3 is provided in the rear section of the feeding cylinder 3, and the screw 2 is configured to be rotationally driven by a drive device 8.

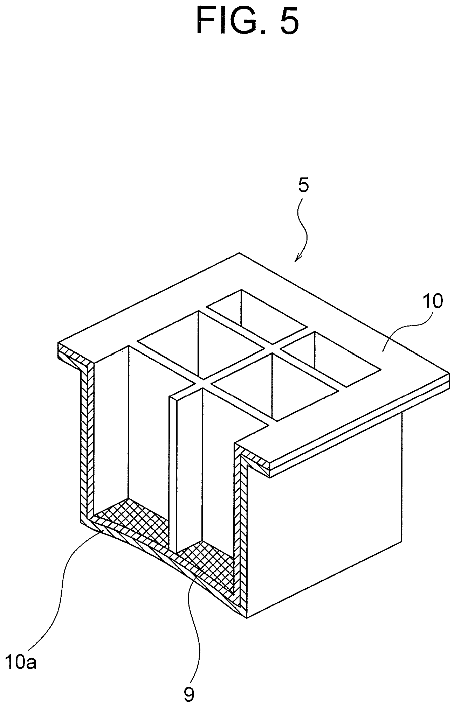

As shown in FIG. 5, a screen unit 5 has, as a whole, a box-like shape, and a screen 9 is inserted between and held by a pressing member 10 and a porous curved wall member 10a.

As shown in FIG. 4, the screen unit 5 is fitted into a vent port 11 at each side of the feeding cylinder 3, and the forced venting chamber 6 is connected to the outer side of each screen unit 5.

Therefore, with such a configuration, the fine powder raw material such as a filler that is fed from the hopper 7 is conveyed by the screw 2 inside the feeding cylinder 3, fed into a kneading cylinder 1a of the kneading extruder 1, kneaded into a molten resin, or melt kneaded after feeding to a solid resin raw material, and the gas accompanying the fine powder raw material in this process is separated and discharged from the screen 9 to the outside through the forced venting chamber 6.

US-A1-2008/248152 discloses a feeding device comprising a receiving member provided with bores. The feeding device of D1 includes two screws that are rotatably provided through the receiving member.

US-A-4,904,285 discloses a deaerator including a screw conveyor disposed in a cylindrical body having a perforated cylindrical intermediate section. The latter includes a filter sandwiched between wire meshes. An outer cylinder is provided outside the perforated cylindrical section to define an evacuation chamber.

Patent Literature 1: Japanese Patent No. 3712185.

### DISCLOSURE OF THE INVENTION

Since the conventional screw-type fine powder raw material feeding device has the above-described configuration, the following problem is associated therewith.

Thus, since the screen unit itself has a shape having a circular arc, the screen also should have a circular-arc shape, and the circular-arc shapes of the screen and the porous curved wall are difficult to mate accurately. As a result, a gap easily appears in a portion where the screen and the porous curved wall member are in contact by the circular arcs, and the fine powder raw material leaks through the gap into the forced venting chamber.

The present invention has been created to resolve this problem. In particular, it is an object of the present indention to provide a screw-type fine powder raw material feeding device in which a screen is wound about the outer periphery of a tubular receiving member and the screen is fixed with annular metal fixtures, thereby ensuring that only gas is discharged to the outside.

The screw-type fine powder raw material feeding device in accordance with the present invention includes: a tubular receiving member connected to a kneading cylinder of a kneading extruder and having a plurality of gas vent ports; a tubular feeding body connected to the tubular receiving member and having a hopper; and one screw that is rotatably provided through the tubular receiving member and the tubular feeding body and serves to feed a fine powder raw material with a low bulk density of 0.05 g/cc to 0.5 g/cc into the kneading cylinder, wherein the device further has a screen wound on an outer periphery of the tubular receiving member and a plurality of annular metal fixtures for bringing the screen into close contact with the tubular receiving member side, a gap between the screen and an outer diameter of the screw (2) is set to 1 mm to 10 mm, only a gas separated from the fine powder raw material is discharged to the outside from the gas vent ports, and the fine powder raw material is fed into the kneading cylinder, with no fine powder raw material being leaked to the outside from the screen. Provided also is the configuration in which a holding member having a hole for forming an annular forced venting chamber is provided on the outer peripheral side of the tubular receiving member, and the gas vent ports, screen, and annular metal fixtures (23) are positioned inside the annular forced venting chamber. Provided also is a screw-type fine powder raw material feeding method including using a screw-type fine powder raw material feeding device including: a tubular receiving member connected to a kneading cylinder of a kneading extruder and having a plurality of gas vent ports; a tubular feeding body connected to the tubular receiving member and having a hopper; and one screw that is rotatably provided through the tubular receiving member and the tubular feeding body and serves to feed a fine powder raw material with a low bulk density of 0.05 g/cc to 0.5 g/cc into the kneading cylinder, wherein the device further has a screen wound on an outer periphery of the tubular receiving member and a plurality of annular metal fixtures for bringing the screen into close contact with the tubular receiving member side, a gap between the screen and an outer diameter of the screw is set to 1 mm to 10 mm, only a gas separated from the fine powder raw material is discharged to the outside from the gas vent ports, and the fine powder raw material is fed into the kneading cylinder, with no fine powder raw material being leaked to the outside from the screen. Provided also is the method in which a holding member having a hole for forming an annular forced venting chamber is provided on the outer peripheral side of the tubular receiving member, and the gas vent ports, screen, and annular metal fixtures are positioned inside the annular forced venting chamber.

Since the screw-type fine powder raw material feeding device and method in accordance with the present invention have the above-described configuration, the following effects can be obtained.

Thus, with the screw-type fine powder raw material feeding device including a tubular receiving member connected to a kneading cylinder of a kneading extruder and having a plurality of gas vent ports; a tubular feeding body connected to the tubular receiving member and having a hopper; and one screw that is rotatably provided through the tubular receiving member and the tubular feeding body and serves for feeding a fine powder raw material with a low bulk density of 0.05 g/cc to 0.5 g/cc into the kneading cylinder, wherein the device has a screen wound on an outer periphery of the tubular receiving member and a plurality of annular metal fixtures for bringing the screen into close contact with the tubular receiving member side, a gap between the screen and an outer diameter of the screw is set to 1 mm to 10 mm, only a gas separated from the fine powder raw material is discharged to the outside from the gas vent ports, and the fine powder raw material is fed into the kneading cylinder, without leaking to the outside from the screen, the screen can be brought into close contact with the receiving member by a uniform force, and since no gap appears between the screen and the receiving member, the fine powder raw material can be prevented from leaking into the annular forced venting chamber, and the fine powder can be stably fed to the extruder having one or more screws.

Further, since a holding member having a hole for forming the annular forced venting chamber is provided on the outer peripheral side of the tubular receiving member, and the gas vent ports, screen, and annular metal fixtures are positioned inside the annular forced venting chamber, gas alone can be forcibly discharged to the outside. Gas discharge without the fine powder raw material leaking to the outside can be also performed in the same manner as in the present application by changing the configuration of the above-described tubular receiving member, screen and tubular fixing metal fixture to a tubular porous filter such as a porous ceramic filter, but with such a configuration, the entire device should be disassembled when the filter is replaced. Meanwhile, with the configuration of the present application, the screen can be replaced, without disassembling the entire device, by "removing only the tubular cover body" or "providing a maintenance window in advance in the tubular cover body".

### BRIEF DESCRIPTION OF THE DRAWINGS

FIG. 1 is a cross-sectional configuration diagram showing the screw-type fine powder raw material feeding device in accordance with the present invention.
FIG. 2 is an enlarged cross-sectional view taken along the B-B line in FIG. 1.
FIG. 3 is a cross-sectional configuration diagram showing the conventional screw-type fine powder raw material feeding device.
FIG. 4 is an enlarged cross-sectional view taken along the A-A line in FIG. 3.
FIG. 5 is a perspective view showing the screen unit shown in FIG. 4.

### BEST MODE FOR CARRYING OUT THE INVENTION

The present invention provides a screw-type fine powder raw material feeding device in which a screen wound about the outer periphery of a tubular receiving member having gas vent ports is fixed with annular metal fixtures, a gap between the screen and the outer diameter of a screw is set to 1 mm to 10 mm, and the fine powder raw material is prevented from leaking to the outside.

### EXAMPLES

The preferred embodiment of the screw-type fine powder raw material feeding device in accordance with the present invention will be explained below with reference to the appended drawings.

Components same as or similar to those of the conventional example will be explained using same reference numerals.

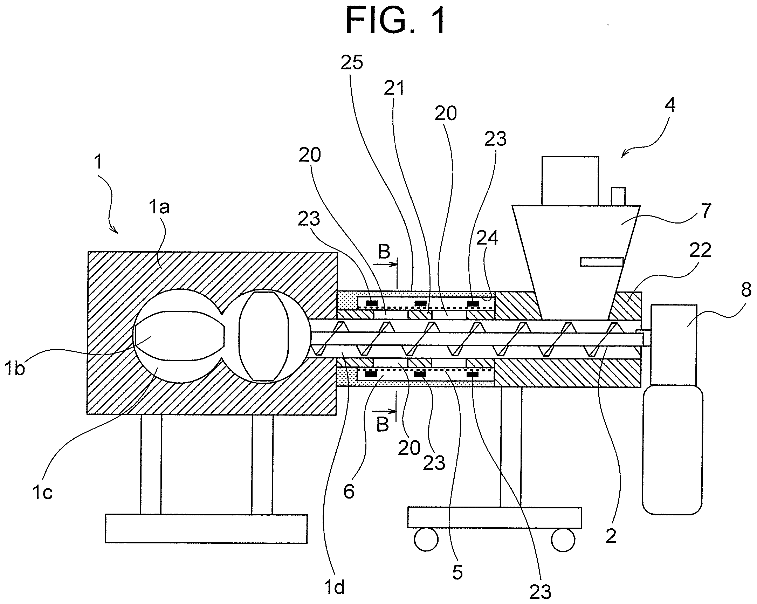

In FIG. 1, the reference numeral 1 denotes a kneading extruder incorporating a twin-shaft screw 1b. A tubular receiving member 21 having a plurality of gas vent ports 20 is connected to a kneading cylinder 1a of the kneading extruder 1.

A tubular feeding body 22 having a hopper 7 is connected to the tubular receiving member 21. The distal end of one screw 2 that is provided rotatably through the tubular receiving member 21 and the tubular feeding body 22 is positioned inside a side hole 1d formed so as to communicate with a cylinder inner hole 1c of the kneading cylinder 1a.

A plurality of annular metal fixtures 23 having sufficient elasticity is provided on the outer periphery of a sheet-shaped screen 5 which has an opening size equal to or less than the average particle size of the fine powder raw material and is wound on the outer periphery of the tubular receiving member 21 so as to cover the gas vent ports 20. In this configuration, the screen 5 can be brought into close contact with the tubular receiving member 21 by the elastic force of the annular metal fixtures 23.

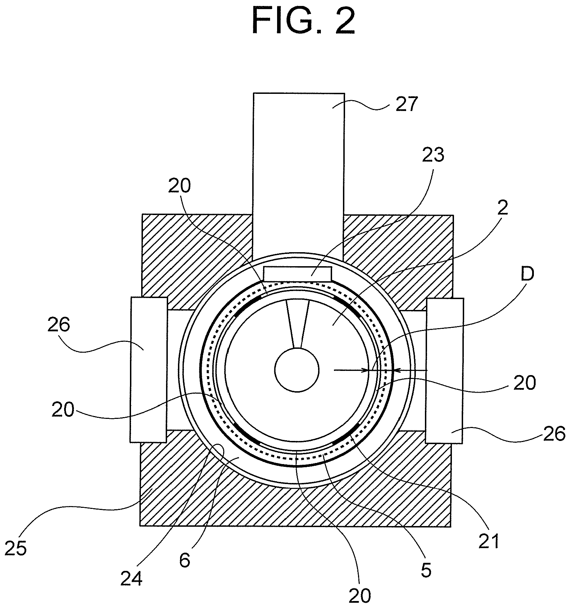

A gap D between the screen 5 and the outer diameter of the screw 2 is set from 1 mm to 10 mm, as shown in FIG. 2, and with such a configuration, only the gas separated from the fine powder raw material is discharged from the vent ports 20 to the outside through the screen 5. The fine powder raw material is fed into the kneading cylinder 1a, without leaking to the outside from the screen 5.

The results of various tests demonstrate that the gap D between the screen 5 and the outer diameter of the screw 2 can be from 1 mm to 10 mm. Where the gap is equal to or less than 1 mm, the probability of the outer diameter of the screw 2 coming into contact with the screen 5 increases, which can easily damage the screen. Where the gap is equal to or greater than 10 mm, the depth of the vent ports 20 increases, the layer of the fine powder raw material becomes too thick, and gas venting efficiency decreases. The range providing for the best efficiency is from 1 mm to 5 mm.

A holding member 25 having a cylindrical hole 24 is provided on the outer peripheral side of the tubular receiving member 21, an annular forced venting chamber 6 formed in an annular shape is provided between the hole 24 and the outer periphery of the tubular receiving member 21, the annular forced venting chamber 6 communicates with a vent duct 27 formed in the holding member 25, and the gas is discharged to the outside through the vent duct 27. A pair of chambers 26 is provided at both sides of the holding member 25.

The operation of the screw-type fine powder raw material feeding device in accordance with the present invention is explained below in the above-described configuration.

In a state in which the kneading extruder 1 is actuated, a resin material constituted by a prescribed resin is kneaded by rotationally driving the twin-shaft screw 1b, and also the annular forced vending chamber 6 is depressurized through the vent duct 27 by a vacuum pump (not shown in the figure), the drive device 8 is driven to drive rotationally the screw 2, whereby a fine powder raw material, for example, such as a filler, which is located in the hopper 7 is fed by the screw 2 to the kneading extruder 1.

In the above-described case, when the fine powder raw material passes through a position corresponding to the screen 5, only the gas that has adhered to the fine powder raw material is discharged to the outside from the depressurized annular forced venting chamber 6 and the vent duct 27 through the mesh (formed with openings equal to or less than the average particle size of the fine powder raw material) of the screen 5.

Since the screen 5 is in close contact with the tubular receiving member 21, the fine powder raw material is prevented from leaking to the outside of the device from between the screen 5 and the tubular receiving member 21 and is admixed to and kneaded with the molten resin produced by kneading of the resin material inside the kneading cylinder 1a.

The molten resin that has thus been kneaded with the fine powder raw material is pelletized with a die and a cutter (not shown in the figure) provided at the distal end side of the kneading cylinder 1a, processed into pellets, and supplied to secondary processing such as injection molding.

The screw-type fine powder raw material feeding device and method in accordance with the present invention are summarized below. Thus, provided are the screw-type fine powder raw material feeding device including: the tubular receiving member 21 connected to the kneading cylinder 1a of the kneading extruder 1 and having a plurality of gas vent ports 20; the tubular feeding body 22 connected to the tubular receiving member 21 and having the hopper 7; and one screw 2 that is rotatably provided through the tubular receiving member 21 and the tubular feeding body 22 and serves for feeding a fine powder raw material with a low bulk density of 0.05 g/cc to 0.5 g/cc into the kneading cylinder 1a, wherein the device has a screen 5 wound on the outer periphery of the tubular receiving member 21 and a plurality of annular metal fixtures 23 for bringing the screen 5 into close contact with the tubular receiving member 21 side, a gap D between the screen 5 and an outer diameter of the screw 2 is set to 1 mm to 10 mm, only a gas separated from the fine powder raw material is discharged to the outside from the gas vent ports 20, and the fine powder raw material is fed into the kneading cylinder 1a, without leaking to the outside from the screen 5, and a method using the device. Also provided is the screw-type fine powder raw material feeding device in which a tubular cover body 24 for forming the annular forced venting chamber 6 is provided on the outer peripheral side of the tubular receiving member 21, and the gas vent port 20, the screen 5, and the annular fixing metal fixture 23 are positioned inside the annular forced venting chamber 6.

### INDUSTRIAL APPLICABILITY

In accordance with the present invention, the screen is wound about the tubular receiving member having gas vent ports and the screen is pressed by annular metal fixtures, thereby making it possible to obtain a screw-type fine powder raw material in which the fine powder raw material is prevented from leaking to the outside, only gas is discharged, and the fine powder raw material can be loaded into the cylinder with good efficiency.

## Claims

1. A screw-type fine powder raw material feeding device comprising:
- a tubular receiving member (21) connected to a kneading cylinder (1a) of a kneading extruder (1) and having a plurality of gas vent ports (20);
- a tubular feeding body (22) connected to the tubular receiving member (21) and having a hopper (7);
- a single screw (2) that is rotatably provided through the tubular receiving member (21) and the tubular feeding body (22) and serves to feed a fine powder raw material with a low bulk density of 0.05 g/cc to 0.5 g/cc into the kneading cylinder (1a),
the screw-type fine powder raw material feeding device being **characterized in that** it further comprises:
- a screen (5) wound on an outer periphery of the tubular receiving member (21) and
- a plurality of annular metal fixtures (23) for bringing the screen (5) into close contact with the tubular receiving member (21) side, a gap (D) between the screen (5) and an outer diameter of the screw (2) being set to 1 mm to 10 mm, so that only a gas separated from the fine powder raw material is discharged to the outside from the gas vent ports (20), and the fine powder raw material is fed into the kneading cylinder (1a), with no fine powder raw material being leaked to the outside from the screen (5).

2. The screw-type fine powder raw material feeding device according to claim 1, wherein a holding member (25) having a hole (24) for forming an annular forced venting chamber (6) is provided on the outer peripheral side of the tubular receiving member (21), and the gas vent port (20), the screen (5), and the annular metal fixtures (23) are positioned inside the annular forced venting chamber (6).

3. A fine powder raw material feeding method using a screw-type fine powder raw material feeding device, the device comprising:
- a tubular receiving member (21) connected to a kneading cylinder (1a) of a kneading extruder (1) and having a plurality of gas vent ports (20);
- a tubular feeding body (22) connected to the tubular receiving member (21) and having a hopper (7);
- a single screw (2) that is rotatably provided through the tubular receiving member (21)and the tubular feeding body (22) ;
- a screen (5) wound on an outer periphery of the tubular receiving member (21) and a plurality of annular metal fixtures (23) for bringing the screen (5) into close contact with the tubular receiving member (21) side, and a gap (D) between the screen (5) and an outer diameter of the screw (2) being set to 1 mm to 10 mm, so that only a gas separated from the fine powder raw material is discharged to the outside from the gas vent ports (20), the fine powder raw material being fed into the kneading cylinder (1a), with no fine powder raw material being leaked to the outside from the screen (5)
the method comprising a step wherein the tubular feeding body feeds a fine powder raw material with a low bulk density of 0.05 g/cc to 0.5 g/cc into the kneading cylinder (1a).

4. The screw-type fine powder raw material feeding method according to claim 3, wherein a holding member (25) having a hole (24) for forming an annular forced venting chamber (6) is provided on the outer peripheral side of the tubular receiving member (21), and the gas vent port (20), the screen (5), and the annular metal fixtures (23) are positioned inside the annular forced venting chamber (6).

## Patentansprüche

1. Feinpulver-Rohmaterial-Zuführvorrichtung vom Schneckentyp, umfassend:
- ein röhrenförmiges Aufnahmeelement (21), das mit einem Knetzylinder (1a) eines Knetextruders (1) verbunden ist und eine Mehrzahl von Gasentlüftungsanschlüssen (20) aufweist;
- einen röhrenförmigen Zuführkörper (22), der mit dem röhrenförmigen Aufnahmeelement (21) verbunden ist und einen Trichter (7) aufweist;
- eine einfache Schnecke (2), die durch das röhrenförmige Aufnahmeelement (21) und den röhrenförmigen Zuführkörper (22) drehbar bereitgestellt ist und zum Zuführen von Feinpulver-Rohmaterial mit einer niedrigen Schüttdichte von 0,05 g/cc bis 0,5 g/cc in den Knetzylinder (1a) dient,
wobei die Feinpulver-Rohmaterial-Zuführvorrichtung vom Schneckentyp **dadurch gekennzeichnet ist, dass** sie ferner Folgendes umfasst:
- ein Sieb (5), das auf einer äußeren Peripherie des röhrenförmigen Aufnahmeelements (21) gewickelt ist, und
- eine Mehrzahl von ringförmigen Metallbefestigungen (23), um das Sieb (5) mit der Seite des röhrenförmigen Aufnahmeelements (21) in engen Kontakt zu bringen, wobei ein Spalt (D) zwischen dem Sieb (5) und einem Außendurchmesser der Schnecke (2) auf 1 mm bis 10 mm eingestellt ist, sodass nur ein Gas, das von dem Feinpulver-Rohmaterial getrennt ist, aus den Gasentlüftungsanschlüssen (20) nach außen entladen wird und das Feinpulver-Rohmaterial in den Knetzylinder (1a) zugeführt wird, wobei kein Feinpulver-Rohmaterial aus dem Sieb (5) nach außen austritt.

2. Feinpulver-Rohmaterial-Zuführvorrichtung vom Schneckentyp nach Anspruch 1, wobei ein Halteelement (25) mit einem Loch (24) zum Bilden einer ringförmigen Fremdlüftungskammer (6) auf der Seite der äußeren Peripherie des röhrenförmigen Aufnahmeelements (21) bereitgestellt ist und der Gasentlüftungsanschluss (20), das Sieb (5) und die ringförmigen Metallbefestigungen (23) im Inneren der ringförmigen Fremdlüftungskammer (6) angeordnet sind.

3. Verfahren zum Zuführen von Feinpulver-Rohmaterial, das eine Feinpulver-Rohmaterial-Zuführvorrichtung vom Schneckentyp verwendet, wobei die Vorrichtung Folgendes umfasst:
- ein röhrenförmiges Aufnahmeelement (21), das mit einem Knetzylinder (1a) eines Knetextruders (1) verbunden ist und eine Mehrzahl von Gasentlüftungsanschlüssen (20) aufweist;
- einen röhrenförmigen Zuführkörper (22), der mit dem röhrenförmigen Aufnahmeelement (21) verbunden ist und einen Trichter (7) aufweist;
- eine einfache Schnecke (2), die durch das röhrenförmige Aufnahmeelement (21) und den röhrenförmigen Zuführkörper (22) drehbar bereitgestellt ist;
- ein Sieb (5), das auf einer äußeren Peripherie des röhrenförmigen Aufnahmeelements (21) gewickelt ist, und eine Mehrzahl von ringförmigen Metallbefestigungen (23), um das Sieb (5) mit der Seite des röhrenförmigen Aufnahmeelements (21) in engen Kontakt zu bringen, und einen Spalt (D) zwischen dem Sieb (5) und einem Außendurchmesser der Schnecke (2) auf 1 mm bis 10 mm eingestellt ist, sodass nur ein Gas, das von dem Feinpulver-Rohmaterial getrennt ist, aus den Gasentlüftungsanschlüssen (20) nach außen entladen wird, wobei das Feinpulver-Rohmaterial in den Knetzylinder (1a) zugeführt wird, wobei kein Feinpulver-Rohmaterial aus dem Sieb (5) nach außen austritt,
wobei das Verfahren einen Schritt umfasst, wobei der röhrenförmige Zuführkörper ein Feinpulver-Rohrmaterial mit einer niedrigen Schüttdichte von 0,05 g/cc bis 0,5 g/cc in den Knetzylinder (1a) zuführt.

4. Verfahren zum Zuführen von Feinpulver-Rohmaterial vom Schneckentyp nach Anspruch 3, wobei ein Halteelement (25) mit einem Loch (24) zum Bilden einer ringförmigen Fremdlüftungskammer (6) auf der Seite der äußeren Peripherie des röhrenförmigen Aufnahmeelements (21) bereitgestellt ist und der Gasentlüftungsanschluss (20), das Sieb (5) und die ringförmigen Metallbefestigungen (23) im Inneren der ringförmigen Fremdlüftungskammer (6) angeordnet sind.

## Revendications

1. Dispositif d'alimentation de matériau brut en poudre fine de type à vis comprenant :
- un organe de réception tubulaire (21) raccordé à un cylindre de malaxage (1a) d'une extrudeuse de malaxage (1) et ayant une pluralité d'orifices d'évacuation de gaz (20) ;
- un corps d'alimentation tubulaire (22) raccordé à l'organe de réception tubulaire (21) et ayant une trémie (7) ;
- une vis unique (2) qui est prévue avec capacité de rotation à travers l'organe de réception tubulaire (21) et le corps d'alimentation tubulaire (22) et sert à alimenter en matériau brut en poudre fine avec une faible masse volumique de 0,05 g/cm³ à 0,5 g/cm³ le cylindre de malaxage (1a),
le dispositif d'alimentation de matériau brut en poudre fine de type à vis étant **caractérisé en ce qu'**il comprend en outre :
- un tamis (5) enroulé sur une périphérie externe de l'organe de réception tubulaire (21) et
- une pluralité d'éléments de fixation en métal annulaires (23) pour faire venir le tamis (5) en contact étroit avec le côté de l'organe de réception tubulaire (21), un écart (D) entre le tamis (5) et un diamètre externe de la vis (2) étant fixé de 1 mm à 10 mm, de sorte que seul un gaz séparé du matériau brut en poudre fine soit déchargé à l'extérieur depuis les orifices d'évacuation de gaz (20), et que le matériau brut en poudre fine soit amené dans le cylindre de malaxage (1a), sans fuite de matériau brut en poudre fine à l'extérieur depuis le tamis (5).

2. Dispositif d'alimentation de matériau brut en poudre fine de type à vis selon la revendication 1, dans lequel un organe de maintien (25) ayant un trou (24) pour former une chambre d'évacuation forcée annulaire (6) est prévu sur le côté périphérique externe de l'organe de réception tubulaire (21), et l'orifice d'évacuation de gaz (20), le tamis (5), et les éléments de fixation en métal annulaires (23) sont positionnés à l'intérieur de la chambre d'évacuation forcée annulaire (6).

3. Méthode d'alimentation de matériau brut en poudre fine utilisant un dispositif d'alimentation de matériau brut en poudre fine de type à vis, le dispositif comprenant :
- un organe de réception tubulaire (21) raccordé à un cylindre de malaxage (1a) d'une extrudeuse de malaxage (1) et ayant une pluralité d'orifices d'évacuation de gaz (20) ;
- un corps d'alimentation tubulaire (22) raccordé à l'organe de réception tubulaire (21) et ayant une trémie (7) ;
- une vis unique (2) qui est prévue avec capacité de rotation à travers l'organe de réception tubulaire (21) et le corps d'alimentation tubulaire (22) ;
- un tamis (5) enroulé sur une périphérie externe de l'organe de réception tubulaire (21) et une pluralité d'éléments de fixation en métal annulaires (23) pour faire venir le tamis (5) en contact étroit avec le côté de l'organe de réception tubulaire (21), et un écart (D) entre le tamis (5) et un diamètre externe de la vis (2) étant fixé de 1 mm à 10 mm, de sorte que seul un gaz séparé du matériau brut en poudre fine soit déchargé à l'extérieur depuis les orifices d'évacuation de gaz (20), le matériau brut en poudre fine étant amené dans le cylindre de malaxage (1a), sans fuite de matériau brut en poudre fine à l'extérieur du tamis (5)
la méthode comprenant une étape dans laquelle le corps d'alimentation tubulaire amène un matériau brut en poudre fine avec une faible masse volumique de 0,05 g/cm³ à 0,5 g/cm³ dans le cylindre de malaxage (1a).

4. Méthode d'alimentation de matériau brut en poudre fine de type à vis selon la revendication 3, dans laquelle un organe de maintien (25) ayant un trou (24) pour former une chambre d'évacuation forcée annulaire (6) est prévu sur le côté périphérique externe de l'organe de réception tubulaire (21), et l'orifice d'évacuation de gaz (20), le tamis (5), et les éléments de fixation en métal annulaires (23) sont positionnés à l'intérieur de la chambre d'évacuation forcée annulaire (6).
